# EUROPEAN PATENT APPLICATION

(11) **EP 2 843 287 A1**
(43) Date of publication of application: **04.03.2015**
(21) Application number: 13192118.1
(22) Date of filing: 08.11.2013
(51) Int. Cl.: F16M 11/04, F16M 11/10, F16M 11/20, F16M 13/00, F16M 13/02

(54) **Quick release device**

(30) Priority: 15.08.2013 TW 102215354
(71) Applicant: Huang, Ming-Hsien, New Taipei City 221 (TW)
(72) Inventor: Huang, Ming-Hsien, New Taipei City 221 (TW)
(74) Representative: Schwerbrock, Florian

(57) **Abstract**

A quick release device including a support base (100) having a first lodging member (110) and a holding module (200) having a second lodging member (210) is provided. The first lodging member includes a bottom wall (112), a side wall (114) and a first retaining unit (116). A containing space (S) is jointly defined by the bottom and side wall. The first retaining unit protrudes from the side wall and has an inner surface (116a) and two side surfaces (116b). The second lodging member includes a body (212), a second retaining unit (216), an elastic unit (215) linked to the second retaining unit, and an external rib (216) protruding from the body. When the second retaining unit retracts into the body, the second lodging member is adapted to move into or out of the containing space. When the protruding second lodging member is in the containing space, the protruding second retaining unit is blocked by the inner surface.

## Description

### CROSS-REFERENCE TO RELATED APPLICATION

This application claims the priority benefit of Taiwan application serial no. 102215354, filed on August 15, 2013. The entirety of the above-mentioned patent application is hereby incorporated by reference herein and made a part of this specification.

### Field of the Invention

The invention relates to a quick release device and more particularly, to a quick release device of a support stand of an electronic device.

### Description of Related Art

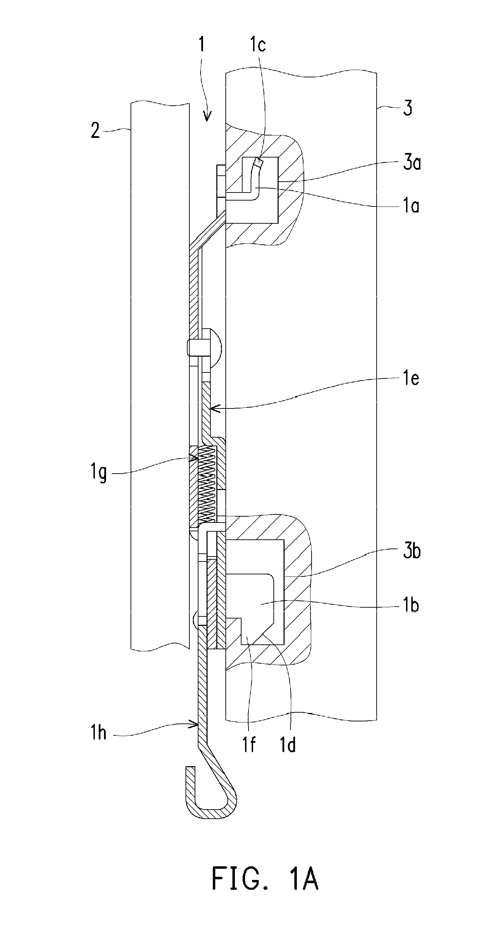

Fig. 1A is a schematic diagram of a flat panel display fixed to a support stand through a conventional quick release device. Referring to Fig. 1A, the conventional quick release device 1 is a fixing medium between a flat panel display 2 and a support stand 3. The quick release device 1 allows the flat panel display 2 to be quickly fixed on the support stand 3, and quickly released from the support stand 3. The quick release device 1 includes a first locking hook 1a and a second locking hook 1b. The support stand 3 includes a corresponding first fixing trench 3a and a second fixing trench 3b.

When in use, the quick release device 1 is screwed to the flat panel display 2. Next, an end 1c of the first locking hook 1a is disposed upwardly into the first fixing trench 3a of the support stand 3. Then an inclined surface 1d of the second locking hook 1b contacts the support stand 3, driving a sliding element 1e to slide upwards, so that an end If of the second locking hook 1b is located at an upper portion of the second fixing trench 3b. Next the sliding element 1e will slide downwards because of a force by a spring 1g, so that the end If of the second locking hook 1b enters the second fixing trench 3b. As such, the flat panel display 2 and the quick release device 1 are fixed onto the support stand 3.

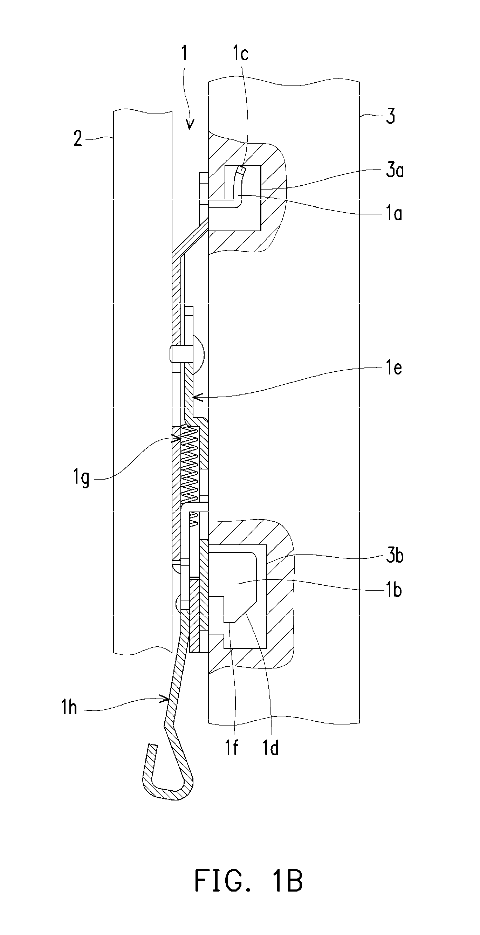

Fig. 1B is a schematic diagram of a flat panel display released from a support stand through the quick release device of Fig. 1A. Referring to Fig. 1B, when the flat panel display 2 is to be released from the support stand 3, a contact element 1h is pushed upwards. This drives the sliding element 1e to slide upwards, so that the end If of the second locking hook 1b leaves the second fixing trench 3b. Then, the flat panel display 2 is pulled outward with the quick release device 1, so that the end If of the second locking hook 1b leaves the upper portion of the second fixing trench 3b. Next, the end 1c of the first locking hook 1a is pulled downward out of the first fixing trench 3a. As such, the flat panel display 2 and the quick release device 1 are completely released from the support stand 3.

However, this kind of quick release device requires the back casing of the flat panel display to have corresponding screw holes, in order to attach the quick release device. That is to say, the manufacturer of flat display panel needs to cooperate with the manufacturer of the support stand. In addition, since each manufacturer has different designs, quick release devices can not be used universally.

### SUMMARY OF THE INVENTION

The invention provides a quick release device. A holding module of the quick release device fixed to an electronic device can be quickly assembled or released from a support base. The quick release device can be carried and assembled to other corresponding support base.

The invention provides a quick release device, including a support base and a holding module. The support base includes a first lodging member capable of spinning. The first lodging member includes a bottom wall, a side wall, and a first retaining unit. A containing space is jointly defined by the bottom wall and the side wall. The first retaining unit protrudes from the side wall and has an inner surface close to the bottom wall and two side surfaces adjoining the inner surface. The holding module includes a second lodging member. The second lodging member includes a body, a second retaining unit, an elastic unit, and an external rib. The elastic unit is disposed in the body, and the second retaining unit can protrude from or retracts into the body by the elastic unit. The external rib protrudes from the body. When the second retaining unit is retracted into the body, the second lodging member can partially enter or retract from the containing space of the first lodging member. When the second retaining unit protrudes from the body and is located in the containing space, the second retaining unit is restricted by the inner surface of the first retaining unit. This way, a portion of the second lodging member is still located in the containing space, and the external rib leans on one of the side surfaces of the first retaining unit. As a result, the second lodging member can drive the first lodging member to rotate.

In an embodiment of the invention, the second lodging member further includes a button, exposed outside the body and linked to the second retaining unit.

In an embodiment of the invention, the second lodging member further includes a connecting rod disposed in the body and pivotally connected to the body. The connecting rod includes a first end. When the connecting rod is located in a first position, the button can be actuated. When the connecting rod is located in a second position, the first end of the connecting rod leans against the button, restricting the button from being actuated.

In an embodiment of the invention, the holding module further includes a rotating element. The rotating element includes two legs. The two legs are respectively located on the two sides of a second end of the connecting rod, so as to drive the connecting rod to switch between the first position and the second position.

In an embodiment of the invention, the holding module further includes a casing and a locking element. The second lodging member protrudes from the casing. The casing includes a through hole. The locking element is disposed in the through hole, and a lock core of the locking element is linked to the rotating element in the casing.

In an embodiment of the invention, the body further includes two restricting blocks, protrudingly disposed on the body and located on the two sides of the connecting rod.

In an embodiment of the invention, the second retaining unit further includes a sloped surface. The closer the sloped surface is to the portion of the second lodging member that first enters the containing space, the closer the sloped surface is to a central axis of the second lodging member.

In an embodiment of the invention, the elastic unit leans against the second lodging member, so that the second retaining unit under a normal condition maintains a status protruding from the body.

In an embodiment of the invention, the support base further includes a base and a support arm unit. The support arm unit is pivotally connected to the base, and the first lodging member is disposed on the support arm unit.

In an embodiment of the invention, the first lodging member is disposed on the support arm unit through a pivot.

In an embodiment of the invention, the support base further includes a fixing unit extending to the base, so as to lock or clamp the support base to an object.

Based on the above, the second lodging member of the holding module of the quick release device can be quickly disassembled from or assembled to a first lodging member of a support base. The disassembled holding module can be carried and assembled to other corresponding support bases. As opposed to having to directly carry the entire quick release device, only having to carry the holding module saves space and reduces weight. In addition, when the second lodging member is lodged to the first lodging member, the second lodging member can drive the first lodging member to rotate. This allows the first lodging member and the second lodging member to be able to rotate related to the base so as to achieve a desired angle. Furthermore, in the quick release device of the invention, the locking element is linked to the rotating element so as to adjust a position of a connecting rod to restrict a button. This prevents others from randomly releasing the holding module from the support base.

In order to make the aforementioned and other features and advantages of the invention more comprehensible, several embodiments accompanied with figures are described in detail below.

### BRIEF DESCRIPTION OF THE DRAWINGS

Fig. 1A is a schematic diagram of a flat panel display fixed to a support stand through a conventional quick release device.
Fig. 1B is a schematic diagram of a flat panel display released from a support stand through the quick release device of Fig. 1A.
Fig. 2 is a schematic view of a quick release device according to an embodiment of the invention.
Fig. 3A is a schematic view of a holding module of the quick release device of Fig. 2 assembled to a support base.
Fig. 3B is another perspective of the schematic view of Fig. 3A.
Fig. 4 is a schematic view of a support base of the quick release device of Fig. 2.
Fig. 5 is a schematic view of a holding module and a support base of the quick release device of Fig. 2.
Fig. 6 is a schematic view of a holding module of the quick release device of Fig. 2.
Fig. 7 is a schematic exploded view of a holding module of the quick release device of Fig. 2.
Fig. 8 is a partial cross-sectional schematic view of a first lodging member and a second lodging member of the quick release device of Fig. 2 before being assembled.
Fig. 9 is a partial cross-sectional schematic view of the quick release device of Fig. 2 where a second retaining unit is being pushed by a first retaining unit and therefore retracting.
Fig. 10 is a partial cross-sectional schematic view of the second retaining unit of the quick release device of Fig. 2 sited in a containing space.
Fig. 11 is a schematic view of a locking element exposed outside of the holding module.
Fig. 12A is a schematic view of a connecting rod of the holding module of the quick release device of Fig. 2 in a first position.
Fig. 12B is a partially enlarged schematic view of Fig. 12A.
Fig. 13A is a schematic view of a connecting rod of the holding module of the quick release device of Fig. 2 in a second position.
Fig. 13B is a partially enlarged schematic view of Fig. 13A.

### DESCRIPTION OF EMBODIMENTS

It is to be understood that both the foregoing and other detailed descriptions, features and advantages are intended to be described more comprehensively by providing an embodiment accompanied with figures hereinafter. The language used to describe the directions such as up, down, left, right, front, back or the like in the reference drawings is regarded in an illustrative rather than in a restrictive sense. Thus, the language used to describe the directions is not intended to limit the scope of the invention.

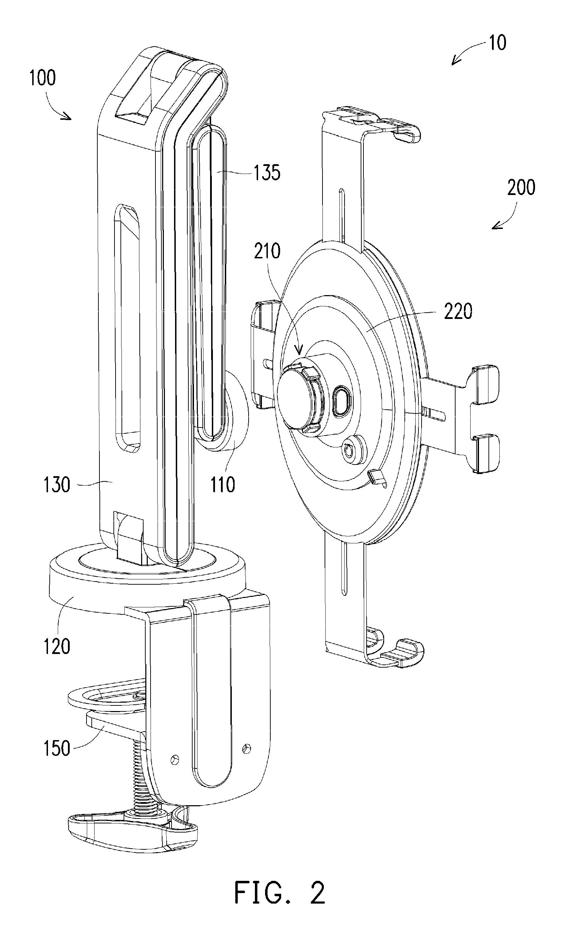

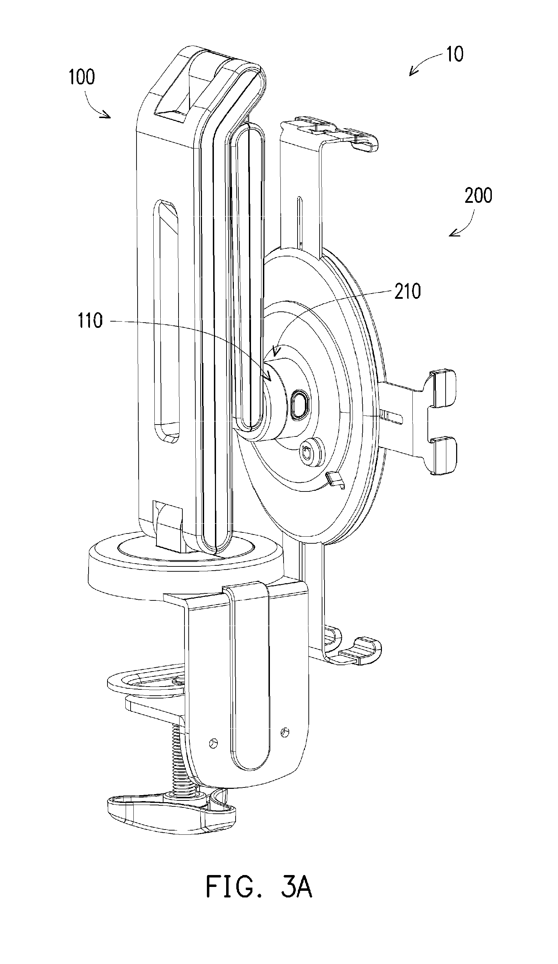

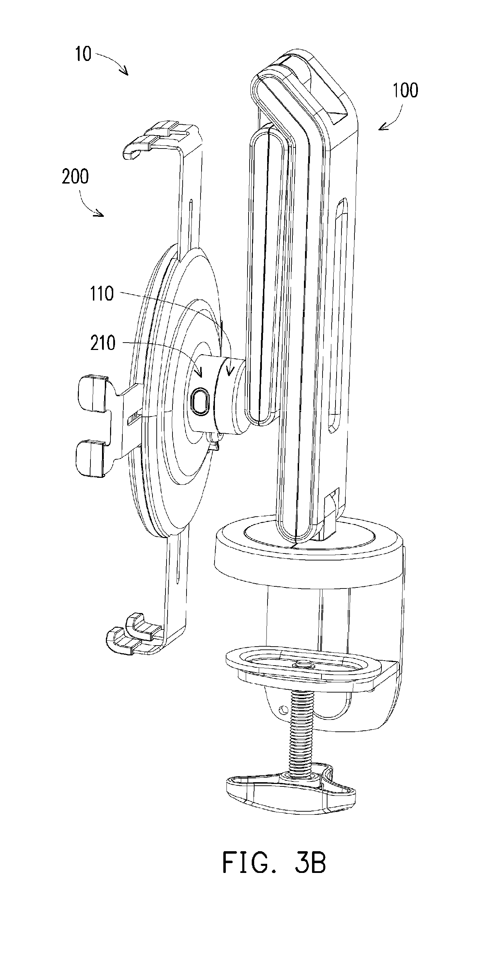

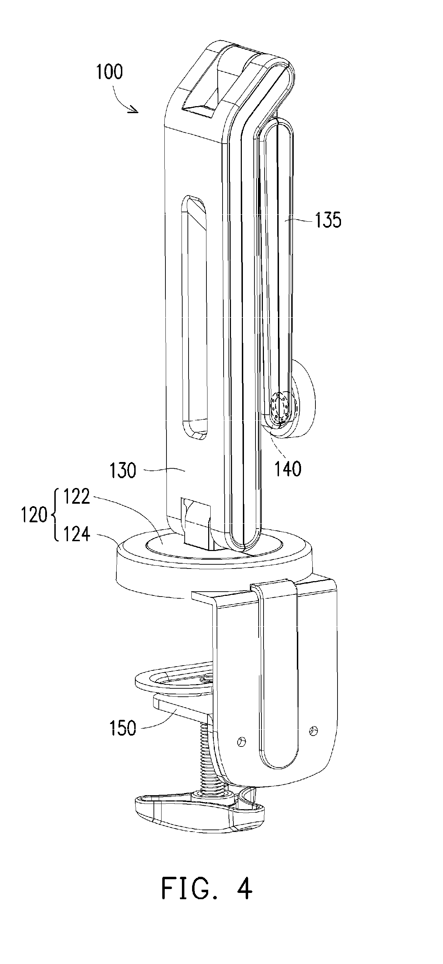

Fig. 2 is a schematic view of a quick release device according to an embodiment of the invention. Fig. 3A is a schematic view of a holding module of the quick release device of Fig. 2 assembled to a support base. Fig. 3B is another perspective of the schematic view of Fig. 3A. Fig. 4 is a schematic view of a support base of the quick release device of Fig. 2.

Referring to Fig. 2 to Fig. 4, a quick release device 10 of the embodiment includes a support base 100 and a holding module 200. The support base 100 is suitable to be fixed on a table, but is not limited thereto. The support base 100 includes a first lodging member 110 capable of spinning, a base 120, a first support arm unit 130 and a second support arm unit 135. The first support arm unit 130 and the second support arm unit 135 are pivotally connected to each other. The first support arm unit 130 is pivotally connected to the base 120. The first lodging member 110 is capable of spinning relative to the second support arm unit 135.

The holding module 200 is suitable to hold an electronic device (not shown). The electronic device can be a device with a flat screen display, such as a smartphone, a tablet PC, or an LCD screen. However, the types of electronic devices are not limited thereto. The holding module 200 includes a second lodging member 210 and a casing 220. The second lodging member 210 protrudes from the casing 220. As seen in Fig. 3A and Fig. 3B, the holding module 200 can be lodged with the first lodging member 110 of the support base 100 through the second lodging member 210. This allows the electronic device to be supported upright on a desktop through the support base 100.

One of the main features of the quick release device 10 of the embodiment is that the second lodging member 210 of the holding module 200 can be quickly assembled or disassembled from the first lodging member 110 of the support base 100. The following will provide a detailed description.

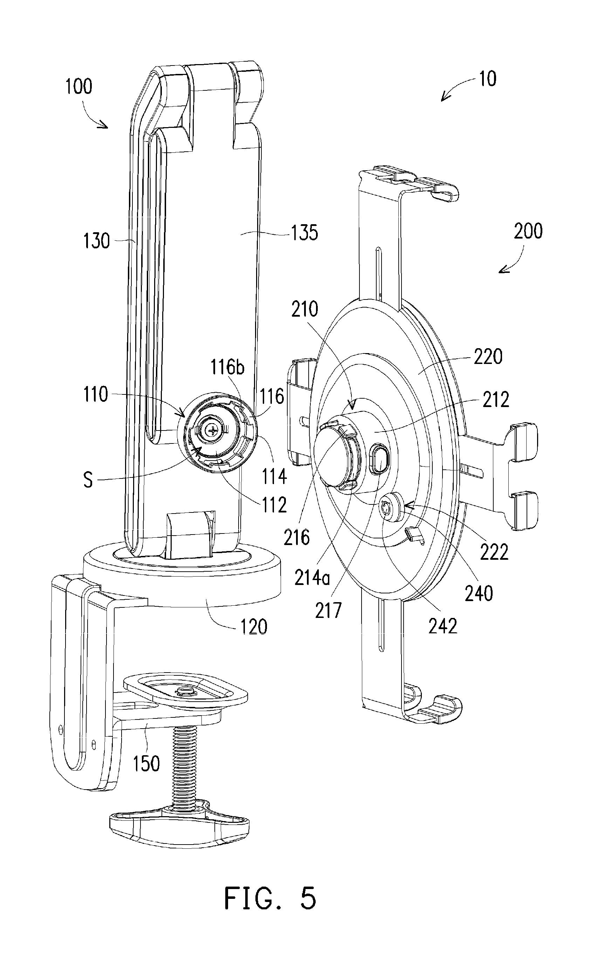

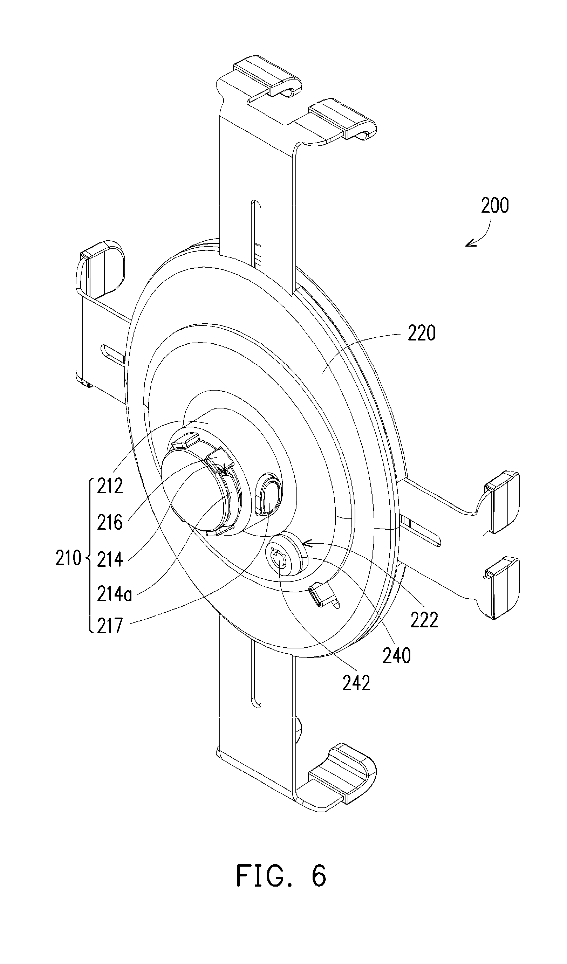

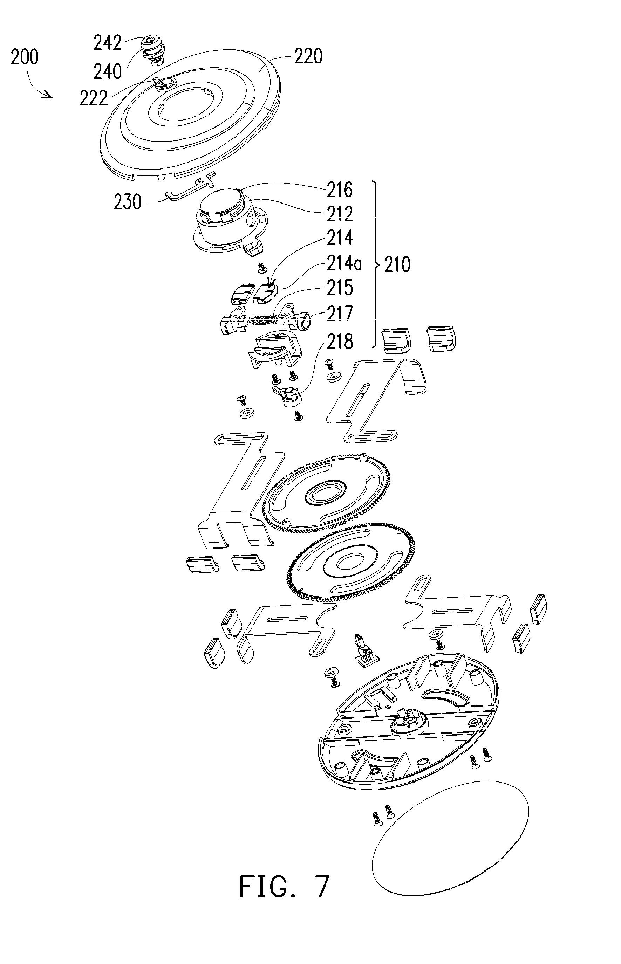

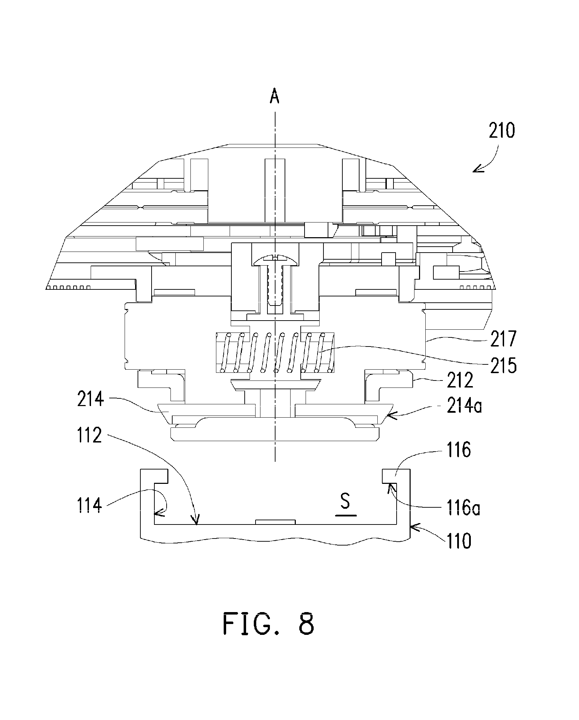

Fig. 5 is a schematic view of a holding module and a support base of the quick release device of Fig. 2. Fig. 6 is a schematic view of a holding module of the quick release device of Fig. 2. Fig. 7 is a schematic exploded view of a holding module of the quick release device of Fig. 2. Fig. 8 is a partial cross-sectional schematic view of a first lodging member and a second lodging member of the quick release device of Fig. 2 before being assembled.

Referring to Fig. 5, the first lodging member 110 of the support base 100 includes a bottom wall 112, a side wall 114, and six first retaining units 116. A containing space S is jointly defined by the bottom wall 112 and the side wall 114. In the embodiment, the six first retaining units 116 equidistantly and surroundingly disposed on the side wall 114 and protrude therefrom. Each first retaining unit 116 has an inner surface 116a (please refer to Fig. 8) close to the bottom wall 112 and two side surfaces 116b adjoining the inner surface 116a. The number of first retaining units 116 is not limited to six, and can be limited to at least one.

Referring to Fig. 6 to Fig 8, the second lodging member 210 of the holding module 200 includes a body 212, two second retaining units 214, an elastic unit 215, four external ribs 216, and two buttons 217. The two second retaining units 214 and the two buttons 217 are exposed outside the body 212, and linked together. In an embodiment, the second retaining units 214 and the buttons 217 are linked together through screws (not shown). In other embodiments, the second retaining units 214 and the buttons 217 are integrally formed when being manufactured. The elastic unit 215 is disposed in the body 212. In the embodiment, the elastic unit 215 is clamped between the two buttons 217, with two ends respectively leaning against the two buttons 217.

In detail, in the embodiment, since the elastic unit 215 is a compression spring, when the second retaining units 214 and the buttons 217 do not receive pressure, the elastic unit 215 will push the second retaining units 214 and the buttons 217 to protrude outside the body 212. At this point, the elastic unit 215 has low elastic potential energy. When the second retaining units 214 or the buttons 217 receive pressure and retract into the body 212, the second lodging member 210 can partially enter the containing space S of the first lodging member 110. At this point, the elastic unit 215 receives compression, and has high elastic potential. Thus, when the pressure of the second retaining units 214 or the buttons 217 is released, the elastic unit 215 will recover, and push the second retaining units 214 and the buttons 217 to protrude from the body 212. As such, the second lodging member 210 is partially held in the containing space S. The detailed description of the elements and corresponding relationships are described hereinafter.

Of course, in other embodiments, the elastic unit 215 can also be changed to lean against the second retaining units 214. Or, when there is only one second retaining unit 214 and one button 217, an end of the elastic unit 215 can lean against the body 212, and the other end of the elastic unit 215 can lean against the button 217 or the second retaining unit 214. The quantity and configuration of the elastic unit 215, the second retaining units 214, and the buttons 217 are not limited thereto.

The method of fixing the first lodging member 110 and the second lodging member 210 can be referred to in Fig. 8 to Fig. 10. As seen in Fig. 8, under a normal condition, the buttons 217 and the second retaining units 214 of the second lodging member 210 protrude from the body 212. The dimensions of a front end of the second lodging member 210 is close to but a little less than a distance between two corresponding first retaining units 116. Thus, when the second lodging member 210 moves towards the first lodging member 110, the front end of the second lodging member 210 can successfully pass through an area between two adjacent first retaining units 116. A front end surface of the front end in the second lodging member 210 is a portion that first enters the containing space S. Each second retaining unit 214 includes a sloped surface 214a. As two sloped surfaces 214a are closer to the front end surface of the second lodging member 210, they are also closer to a central axis A of the second lodging member 210. That is to say, the closer the two sloped surfaces 214a are to the front end surface of the second lodging member 210, the closer the two sloped surfaces 214a are to each other. In other words, the sloped surfaces 214a are sloped towards the first retaining units 116. When the second retaining units 214 do not receive pressure, the distance between the two sloped surfaces 214a of two symmetrical second retaining units 214 are substantially greater than a distance between two first retaining units 116.

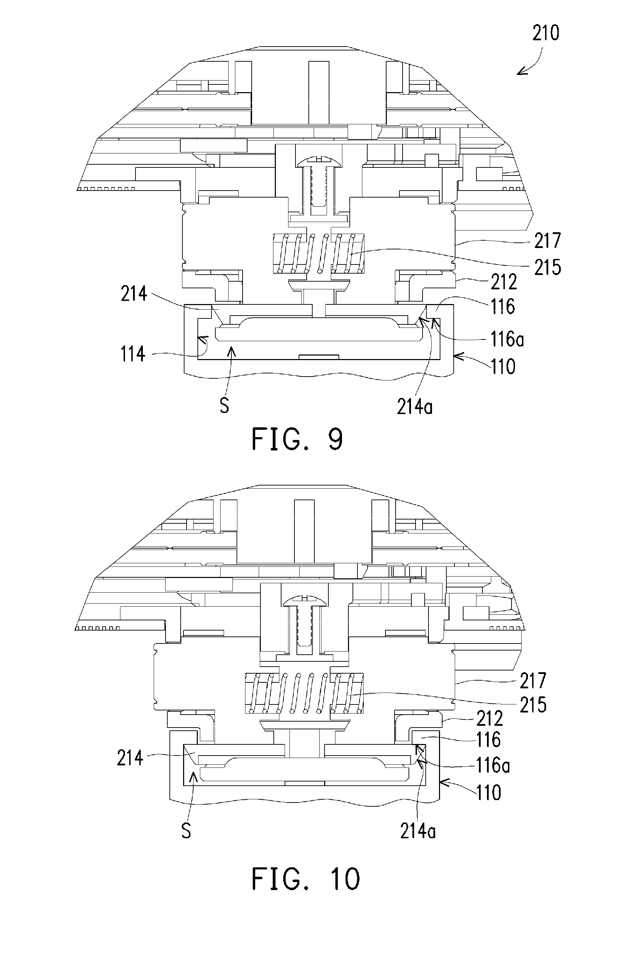

Fig. 9 is a partial cross-sectional schematic view of the quick release device of Fig. 2 where a second retaining unit is being pushed by a first retaining unit and therefore retracting. Referring to Fig. 9, as the sloped surfaces 214a are closer to the central axis A of the second lodging member 210, a distance between the two sloped surfaces 214a gradually shrinks in a direction towards the front end surface of the second lodging member 210. When the body 212 of the second lodging member 210 gradually enters the containing space S of the first lodging member 110, the first retaining unit 116 of the first lodging member 110 will push the sloped surface 214a of the second retaining unit 214. This way, the second retaining unit 214 will gradually retract into the body 212, without having to apply additional pressure to the buttons 217.

Fig. 10 is a partial cross-sectional schematic view of the second retaining unit of the quick release device of Fig. 2 sited in a containing space. Referring to Fig. 10, after the second retaining unit 214 completely enters the containing space S, since the sloped surface 214a of the second retaining unit 214 is no longer pushed by the first retaining unit 116, at this point, the elastic unit 215 recovers so that the second retaining unit 214 again protrudes outside the body 212. As seen in Fig. 10, the second retaining unit 214 is restricted (i.e. planar surface to planar surface) by the inner surface 116a of the first retaining unit 116. This way, the front end of the second lodging member 210 is maintained in the containing space S.

When the holding module 200 is to be separated from the support base 100, the buttons 217 are pressed. Then, the buttons 217 will move in towards the body 212, driving the second retaining units 214 to retract in the body 212. This allows the front end of the second lodging member 210 to be pulled out of the containing space S of the first lodging member 110.

It should be noted that the quick release device 10 of the embodiment has four claws (not numbered) configured with the above structure to hold the electronic device. Thus, when the holding module 200 is holding the electronic device, it can quickly assemble to or disassemble from the support base 100. The outer casing of the electronic device does not require a corresponding quick release structure. The claws can be adjusted, so as to correspond to electronic devices of different dimensions. In addition, when the user wants to switch the electronic device to a different support stand (such as a wall mount stand) or bring it to a different environment, the electronic device does not need to be separated from the holding module 200. The electronic device together with the holding module 200 can be released from the support base 100, and can together be assembled onto another corresponding support stand.

Furthermore, another feature of the quick release device 10 of the embodiment is when the second lodging member 210 is lodged with the first lodging member 110, the second lodging member 210 can drive the first lodging member 110 to spin. This allows the electronic device in the holding module 200 to rotate relative to the second support arm unit 135.

Referring back to Fig. 5 and Fig. 6, in the embodiment, the four external ribs 216 surround and protrude from the body 212. A width of the external rib 216 corresponds to a distance between two first retaining units 116. When the second lodging member 210 of the holding module 200 is assembled to the first lodging member 110 of the support base 100, the external ribs 216 are located between two adjacent first retaining units 116. Thus, if the holding module 200 is rotated (for example, for switching the electronic device from a portrait mode to a landscape mode), the external ribs 216 of the second lodging member 210 will push one of the side surfaces 116b of the first retaining unit 116 of the first lodging member 110. This way, the second lodging member 210 of the holding module 200 will drive the first lodging member 110 to rotate. Since the first lodging member 110 is pivotally connected to the second support arm unit 135, the holding module 200 can rotate relative to the second support arm unit 135 of the support base 100, so as to adjust the upright position of the electronic device.

Of course, the amount of the external ribs 216 and the relationship between the first retaining units 116 are not limited thereto. In other embodiments, there can be just one external rib 216 to achieve the above effect. In addition, the width of the external rib 216 can be smaller than a distance between the two adjacent first retaining units 116. As such, when rotating the holding module 200, there will be a small section of idle spinning (a length of the section will be the difference between the width of the external rib 216 and the distance between two adjacent first retaining units 116, i.e. the value subtracting the width of the external rib 216 from the distance between two adjacent first retaining units 116). However, when the external rib 216 contacts the side surface 116b of the first retaining unit 116, the first lodging member 110 will still be driven to rotate.

In addition, in the embodiment, in order to prevent others from randomly releasing the holding module 200 from the support base 100, the quick release device 10 of the embodiment further includes a mechanism that stops the holding member 200 from being disassembled form the support base 100 through a locking element 240 and the relating linking components. In other words, it is an anti-theft mechanism.

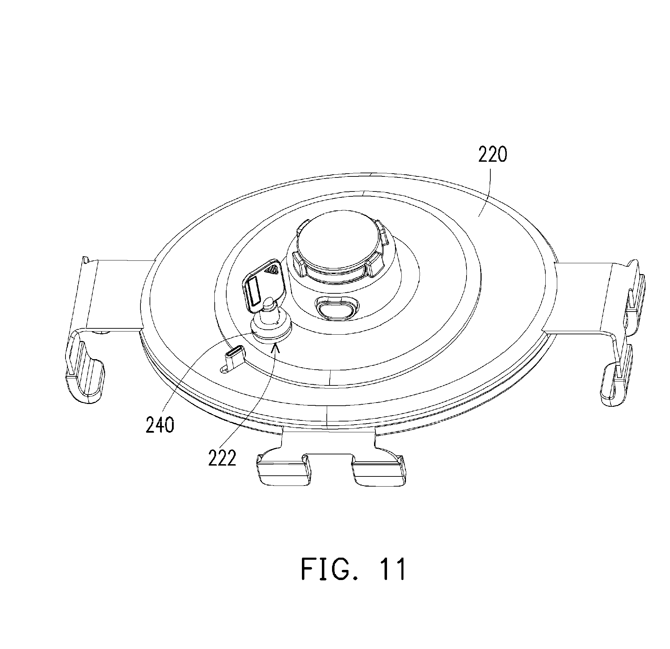

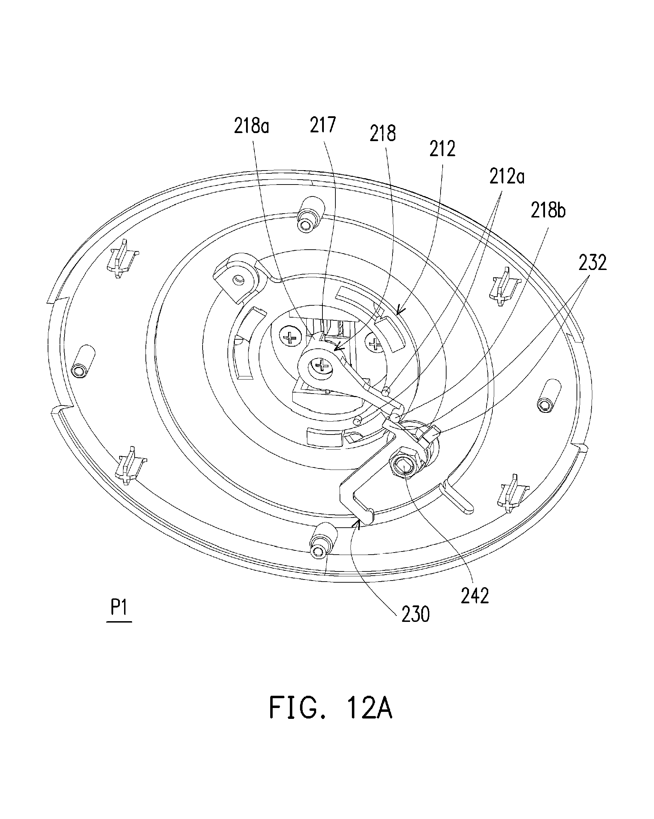

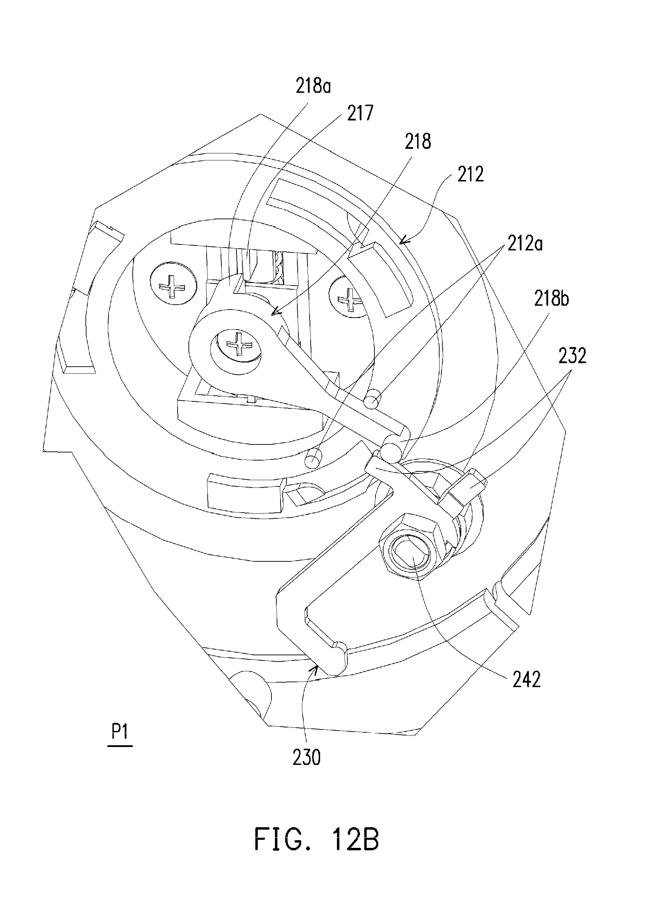

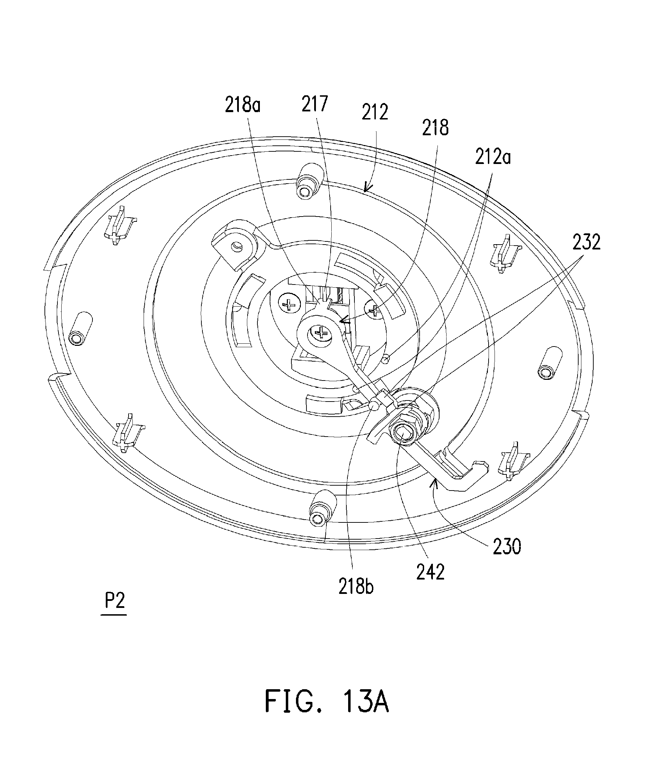

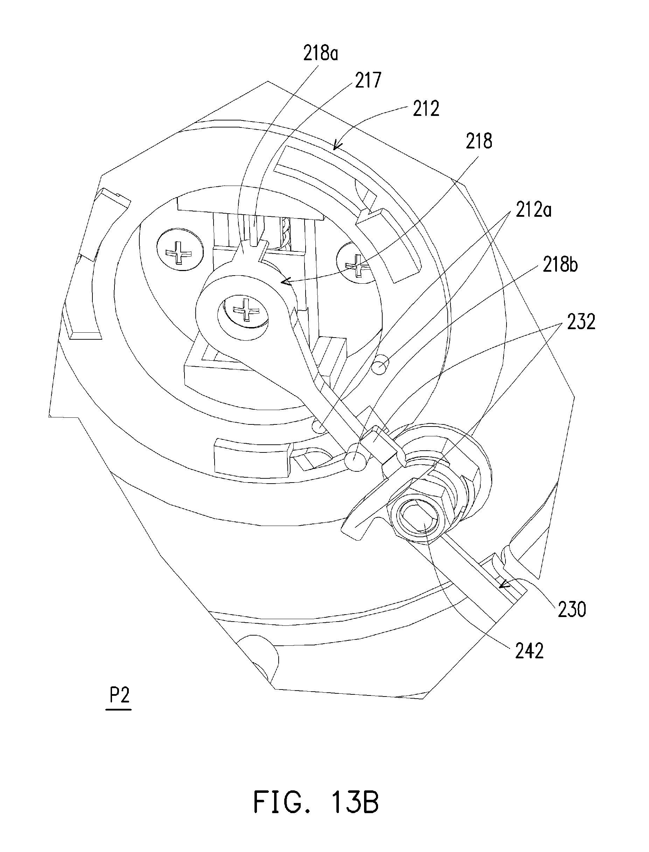

Fig. 11 is a schematic view of a locking element exposed outside of the holding module. Fig. 12A is a schematic view of a connecting rod of the holding module of the quick release device of Fig. 2 in a first position. Fig. 12B is a partially enlarged schematic view of Fig. 12A. Fig. 13A is a schematic view of a connecting rod of the holding module of the quick release device of Fig. 2 in a second position. Fig. 13B is a partially enlarged schematic view of Fig. 13A.

Referring to Fig. 11 to Fig. 12B, the holding module 200 further includes a locking element 240 and a rotating element 230 disposed in a casing 220. The casing 220 includes a through hole 222. The locking element 240 is disposed in the through hole 222, and the locking element 240 includes a lock core 242 linked to the rotating element 230. The rotating element 230 includes two legs 232. The second lodging member 210 further includes a connecting rod 218 disposed in the body 212 and pivotally connected to the body 212. The connecting rod 218 includes a first end 218a and a second end 218b opposite to each other. The first end 218a of the connecting rod 218 protrudes in a direction towards the second retaining unit 214. The two legs 232 of the rotating element 230 are respectively located on two sides of the second end 218b of the connecting rod 218.

When a key (not numbered) is inserted into the locking element 240, and turned, the lock core 242 will drive the two legs 232 of the rotating element 230 to rotate in a clockwise direction. One of the two legs 232 will push the second end 218b of the connecting rod 218, so that the connecting rod 218 can rotate between a first position P1 (shown in Fig. 12A and Fig. 12B, i.e. unlocked position) and a second position P2 (shown in Fig. 13A and Fig. 13B, i.e. locked position). In addition, the body 212 further includes two restricting blocks 212a, protrudingly disposed on the body 212 and located on the two sides of the connecting rod 218. The restricting blocks 212a restrict the rotating range of the connecting rod 218 to be between the first position P1 and the second position P2.

As seen in Fig. 12A and Fig. 12B, when the connecting rod 218 is located in the first position P1, the first end 218a of the connecting rod 218 is not located in a retracting path of the button 217. At this point, the button 217 can be actuated. In other words, the button 217 can be pressed so that the second lodging member 210 of the holding module 200 separates from the first lodging member 110 of the support base 100.

If it is necessary to keep the second lodging member 210 of the holding module 200 from separating from the first lodging member 110 of the support base 100, the key should be turned reversely. This way, the lock core 242 will drive the legs 232 of the rotating element 230 to rotate in a counterclockwise direction and to push the second end 218b of the connecting rod 218. The connecting rod 218 will also rotate in a clockwise direction, so that the first end 218a of the connecting rod 218 will move to the second position P2 as shown in Fig. 13A and Fig. 13B. That is to say, the first end 218a of the connecting rod 218 will be in a retracting path of the button 217, leaning against the button 217. At this point, if pressure is applied towards the button 217, the button 217 will be blocked by the first end 218a of the connecting rod 218 and can not be pressed. Thus, the second retaining unit 214 linked to the button 217 will still protrude outside the body 212. That is to say, the second retaining unit 214 is still restricted by the inner surface 116a of the first retaining unit 116. This prevents others from randomly separating the holding module 200 from the support base 100.

In addition, referring back to Fig. 4, in the embodiment, the second support arm unit 135 can rotate almost 360 degrees in a vertical direction relative to the first support arm unit 130. The first support arm unit can rotate 180 degrees in a vertical direction relative to the base 120. In addition, the base 120 can rotate horizontally. In detail, a central portion 122 where the base 120 and the first support arm unit 130 are pivotally connected can rotate relative to an outer portion 124. The first lodging member 110 is disposed on the second support arm unit 135 through a pivot 140. The pivot 140 can be a ball bearing, so that the first lodging member 110 can spin freely relative to the second arm support unit 135.

In the embodiment, the support base 100 further includes a fixing unit 150 extending to the base 120, so as to lock or clamp the support base 100 to a side wall of an object such as a desk or a bookshelf. However, in other embodiments, the support base 100 can also be flatly placed on a desk through the base 120. In this case, the base 120 will have to be bigger or heavier than the quick release device, to prevent the quick release device 10 from tilting over.

Based on the above, the second lodging member of the holding module of the quick release device can be quickly disassembled from or assembled to a first lodging member of a support base. The disassembled holding module can be carried and assembled to other corresponding support bases. In addition, when the second lodging member is lodged to the first lodging member, the second lodging member can drive the first lodging member to rotate. This allows the first lodging member and the second lodging member to be able to rotate with respect to the base so as to achieve a desired angle. Furthermore, the quick release device of the invention can move and rotate through the locking element to adjust a position of a connecting rod to restrict a button. This prevents others from randomly releasing the holding module from the support base.

In detail, in the quick release device, the second retaining unit of the second lodging member of the holding module can be retracted into the body. This allows the front end of the second lodging member to enter or leave the containing space of the first lodging member. When the front end of the second lodging member is located in the containing space and the second retaining unit protrudes outside the body, if the second lodging member is desired to move in a direction away from the bottom wall, the second retaining unit will be restricted by the inner surface of the first retaining unit. This way, the second lodging member will be maintained in the containing space of the first lodging member. Pressing the button can allow the second retaining unit to retract into the body so as to let the second lodging member separate from the first lodging member. This design allows the holding module to be quickly assembled to or disassembled from the support base. Thus, when the user wants to switch the electronic device to a different support stand or bring it to a different environment, the electronic device does not need to be separated from the holding module. The electronic device together with the holding module can be released from the support base, and can together be assembled onto another corresponding support stand. In addition, the first lodging member is linked to the second lodging member through the external rib of the second lodging member leaning against a side surface of the first retaining unit. As such, the electronic device fixed to the holding module can move in a three dimensional space relative to the base. In addition, the quick release device of the invention includes a locking element disposed on the holding module. The lock core of the locking element is linked to the rotating element. The rotating element can drive the second end of the connecting rod, so that the first end of the connecting rod is rotated to a position leaning against the button. That is to say, the first end occupies the space originally intended for the button to move within the body. This way, the button can not be pressed down. As such, this prevents others from randomly releasing the holding module from the support base, and effectively increases the security of the holding module of the quick release device.

Although the invention has been described with reference to the embodiments thereof, it will be apparent to one of the ordinary skills in the art that modifications to the described embodiments may be made without departing from the spirit of the invention. Accordingly, the scope of the invention will be defined by the attached claims not by the above detailed description.

## Claims

1. A quick release device, comprising:
a support base, comprising a first lodging member capable of spinning, wherein the first lodging member comprises a bottom wall, a side wall, and at least one retaining unit, a containing space is jointly defined by the bottom wall and the side wall, and the at least one retaining unit protrudes from the side wall and comprises an inner surface close to the bottom wall and two side surfaces opposite to each other and adjacent to the inner surface; and
a holding module, comprising a second lodging member, wherein the second lodging member comprises a body, a second retaining unit, an elastic unit, and an external rib, wherein the elastic unit is disposed in the body, and the second retaining unit is adjustable to protrude from or retract into the body by the elastic unit, and the external rib protrudes from the body, wherein:
when the second retaining unit is retracted into the body, the second lodging member partially enters or withdraws from the containing space of the first lodging member,
when the second retaining unit protrudes from the body and is located in the containing space, the second retaining unit is restricted by the inner surface of the first retaining unit, so that a portion of the second lodging member is still located in the containing space, and the external rib leans on one of the side surfaces of the first retaining unit, so that the second lodging member is capable of driving the first lodging member to rotate.

2. The quick release device as claimed in claim 1, wherein the second lodging member further comprises a button, exposed outside the body and linked to the second retaining unit.

3. The quick release device as claimed in claim 2, wherein the second lodging member further comprises a connecting rod disposed in the body and pivotally connected to the body, and the connecting rod comprises a first end, wherein when the connecting rod is located in a first position, the button can be actuated, and when the connecting rod is located in a second position, the first end of the connecting rod leans against the button, restricting the button from being actuated.

4. The quick release device as claimed in claim 3, wherein the holding module further comprises a rotating element, comprising two legs, wherein the two legs are respectively located on two sides of a second end of the connecting rod, so as to drive the connecting rod to switch between the first position and the second position.

5. The quick release device as claimed in claim 4, wherein the holding module further comprises a casing and a locking element, the second lodging member protrudes from the casing, the casing comprises a through hole, the locking element is disposed in the through hole, and a lock core of the locking element is linked to the rotating element in the casing.

6. The quick release device as claimed in claim 3, wherein the body further comprises two restricting blocks, protrudingly disposed on the body and located on two sides of the connecting rod.

7. The quick release device as claimed in claim 1, wherein the second retaining unit further comprises a sloped surface, wherein the closer the sloped surface is to a portion of the second lodging member that first enters the containing space, the closer the sloped surface is to a central axis of the second lodging member.

8. The quick release device as claimed in claim 1, wherein the elastic unit leans against the second lodging member, so that the second retaining unit under a normal condition maintains a status of protruding from the body.

9. The quick release device as claimed in claim 1, wherein the support base further comprises a base and a support arm unit, wherein the support arm unit is pivotally connected to the base, and the first lodging member is disposed on the support arm unit.

10. The quick release device as claimed in claim 9, wherein the first lodging member is disposed on the support arm unit through a pivot.

11. The quick release device as claimed in claim 9, wherein the support base further comprises a fixing unit extending to the base, so as to lock or clamp the support base to an object.
